(19) Europäisches Patentamt / European Patent Office / Office européen des brevets

(11) **EP 3 283 745 B1**

(12) **EUROPÄISCHE PATENTSCHRIFT**

(45) Veröffentlichungstag und Bekanntmachung des Hinweises auf die Patenterteilung:
**29.12.2021 Patentblatt 2021/52**

(21) Anmeldenummer: **15717424.4**

(22) Anmeldetag: **13.04.2015**

(51) Int Cl.:
*F02C 1/05* (2006.01)    *F02C 6/16* (2006.01)
*F02C 6/14* (2006.01)

(86) Internationale Anmeldenummer:
**PCT/EP2015/000770**

(87) Internationale Veröffentlichungsnummer:
**WO 2016/165724 (20.10.2016 Gazette 2016/42)**

(54) **STROMSPEICHERUNG ÜBER THERMISCHE SPEICHER UND LUFTTURBINE**

ENERGY STORAGE VIA THERMAL STORES AND AIR TURBINE

STOCKAGE D'ÉLECTRICITÉ PAR L'INTERMÉDIAIRE D'ACCUMULATEURS THERMIQUES ET D'UNE TURBINE À AIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.02.2018 Patentblatt 2018/08**

(73) Patentinhaber: **Karl Brotzmann Consulting GmbH**
**92224 Amberg (DE)**

(72) Erfinder:
• **STEVANOVIC, Dragan**
**92237 Sulzbach-Rosenberg (DE)**

• **BROTZMANN, Karl**
**92224 Amberg (DE)**

(74) Vertreter: **Kador & Partner PartG mbB**
**Corneliusstraße 15**
**80469 München (DE)**

(56) Entgegenhaltungen:
WO-A1-2013/005192    WO-A2-2009/103106
DE-A1-102009 038 322    DE-C2- 4 236 619
DE-C2- 10 039 246

• **None**

**Beschreibung**

Die Erfindung betrifft ein Verfahren bei dem elektrische Energie in Form von Hochtemperaturwärme gespeichert wird und nach Bedarf ein Gas komprimiert, mit der gespeicherte Wärme aufgeheizt und einer Gasturbine zur Stromerzeugung zugeführt wird.

Es ist bekannt, dass die Stromspeicherung eine Möglichkeit zur Harmonisierung des Verbrauchs und der Erzeugung von Strom ist. In Zeiten, in denen die Stromproduktion über dem Strombedarf liegt, wird überschüssiger Strom gespeichert, und wenn der Stromverbrauch hoch ist, nimmt man die gespeicherte Strommenge wieder auf. Mit steigendem Anteil von Strom aus erneuerbaren Energien, besonders aus Wind und Sonne, gewinnt diese Problematik an Bedeutung, weil die Stromerzeugung, und nicht nur der Stromverbrauch, sehr ungleichmäßig ist.

Es ist auch bekannt, dass diese Stromspeicherung, abhängig von Stromangebot und Strombedarf in einem Stromnetz, sehr ungleichmäßig stattfinden kann. Z.B. kann nach einer kurzen Speicherphase eine längere Entladungsphase folgen, oder umgekehrt.

Es ist auch möglich, dass mehrere kurze Lade- und Entladungsphasen hintereinander folgen. Ein Stromspeicher muss in der Lage sein diese Bedingungen optimal zu erfüllen.

Stand der Technik

Eine bekannte Methode ist die Stromspeicherung mit reversiblen Wasserkraftwerken, auch als Pumpspeicherkraftwerke bekannt. Eine andere Variante ist es, zwei unterirdischen Kavernen auf unterschiedlichen Tiefen als Wasserreservoir zu nutzen, wie in DE102011117785 beschrieben wird.

Eine andere Technologie, die auch für die großtechnische Stromspeicherung geeignet ist, ist die Druckluftspeicherung in Kavernen (englisch als "CAES - compressed air energy storage" bezeichnet). Luft wird durch einen elektrisch angetriebenen Kompressor verdichtet und in unterirdischen Salzkavernen gespeichert. Um die Energie nachfolgend freizusetzen, nutzt man die komprimierte Luft zur Erdgasverbrennung in einer Gasturbine. Dies hat jedoch den Nachteil, dass hochwertige fossile Brennstoffe (wie Erdgas oder Kerosin) gebraucht werden und dass sich der Luftdruck während der Entnahme der Druckluft aus dem Druckluftspeicher verringert - was für den Gasturbineprozess unvorteilhaft ist. Der Gesamtwirkungsgrad des Prozesses wird dadurch verringert.

Es gibt zwei Verbesserungsmöglichkeiten für dieses Prinzip. Eine ist, dass man einen Druckluftspeicher unterhalb einer Flüssigkeitssäule positioniert, um den Druck auf diese Weise konstant zu halten (isobare Speicher). Die andere ist die Verwendung eines adiabaten Druckluftspeichers, der ohne zusätzlichen Brennstoff auskommt und einen deutlich höheren Wirkungsgrad aufweist. Dabei nutzt man einen regenerativen Wärmetauscher um die Luft nach der Kompression zu kühlen und später, bei der Entladung, mit dieser gespeicherten Wärme die Luft vor dem Eintritt in die Turbine wieder aufzuheizen. Die Investitionskosten für solche Speicherwerke sind jedoch sehr hoch.

Eine neue Alternative für die Stromspeicherung ist das so genannte Wind-Gas-Verfahren (ursprünglich in Patentschrift DE102009018126A1 beschrieben). Überschüssiger Strom aus dem Netz (nicht nur Windstrom) wird genutzt für die Wasserelektrolyse und zur Gewinnung von Wasserstoff. Wasserstoff wird dann mit Kohlendioxid für die Methanisierung verwendet und das gewonnene Methan wird im Gasnetz gespeichert. Beim Bedarf wird dieses Gas für die Stromerzeugung genutzt, z.B. mit einer Gasturbine oder einem GuD-Zyklus (Gas-und-Dampf). Dieses Verfahren ist sehr komplex und deswegen (es beinhaltet viele Prozessschritte mit lokalen Verlusten) nicht effizient (Gesamtwirkungsgrad liegt zwischen 14 und 36%). Die Investitionskosten sind ebenfalls sehr hoch.

In der Patentschrift WO 2009/103106A2 ist eine Vorrichtung für die Wärmespeicherung beschrieben, die in einem Kreislauf mit einer Gasturbine und einem Stromgenerator verwendet werden kann. Als Speichermedium sind quarzfreie Steine genannt. Aus Erfahrungen mit anderen ähnlichen Anlagen, wie z.B. Winderhitzer für Hochöfen, ist es bekannt, dass die Temperatur während der Betriebsphase etwa linear abfällt.

Eine weitere Vorrichtung für die Wärmespeicherung ist in der Patentschrift DE 10 2013 004 330 A1 beschrieben. Dort wird beansprucht, dass der Heizwiderstand für die elektrische Beheizung gleichzeitig mindestens 30% der gesamten Wärmekapazität betragen muss. Neben diesen stabförmigen Heizwiderständen, besteht das restliche Wärmespeichermedium aus keramischen Formelementen, bei denen es sich eigentlich wieder um Stäbe mit quadratischem Querschnitt handelt. Damit ist, wie oben, ein lineares Temperaturprofil während einer Entladungsphase zu erwarten.

Aus der DE 42 36 619 C2 ist ein Verfahren zum Aufheizen von Gasen in einem Regenerator bekannt, wobei der Regenerator eine Wärmespeichermasse aus Schüttgut umfasst. Die Korngröße des Schüttguts wird bevorzugt mit 4 bis 8 mm gewählt. Die WO 2013/005192 A1 offenbart ein Wärmekraftwerk, umfassend: eine Einheit, die Wärmeenergie erzeugt, einen Regenerator, der ein Bett aus Energiespeicherelementen umfasst, einen Verbraucher von Wärmeenergie und eine Zirkulationsvorrichtung. Das Material der Energiespeicherelemente wird in Abhängigkeit der spezifischen Wärmekapazitäten des Materials bei dessen Ladetemperatur und bei dessen Entladungstemperatur gewählt.

Die vorliegende Patentanmeldung betrifft ein neues Verfahren und entsprechende Vorrichtungen zur Stromspeicherung mit relativ niedrigen Investitionskosten und hohem Gesamtwirkungsgrad, bei der schon bekannte und preiswerte Komponenten und Technologien genutzt werden können und bei denen die Temperatur während der Entladungsphase im Hochtemperaturwärmespeicher weitgehend konstant bleibt. Damit wird es ermöglicht, dass bis zur vollständigen Entladung des Speichers die Austrittstemperatur aus dem Speicher oberhalb der Turbineneintrittstemperatur bleibt. Die vorliegende Erfindung betrifft ein Verfahren zur Stromspeicherung gemäß Anspruch 1 sowie eine Vorrichtung für die Stromspeicherung gemäß Anspruch 12. Der vorliegenden Erfindung liegt die Erkenntnis zu Grunde, dass eine solche vorteilhafte Temperaturverteilung erreicht wird, wenn als Wärmespeichermedium eine Schüttung aus Partikeln verwendet wird, in der das Verhältnis zwischen der Betthöhe **H** in Strömungsrichtung des Gases und dem mittleren Partikeldurchmesser **d** des Schüttguts mindestens 10, bevorzugt mindestens 100, bevorzugter mindestens 250, noch bevorzugter mindestens 500 und besonders bevorzugt mindestens 1000 beträgt. Je größer dieser Verhältnis ist, desto größer ist der Druckverlust des strömenden Gases. Da dieses Gas nur während einer Entladungsphase durch den Wärmespeicher strömt, der dann unter Turbinendruck steht, ist der Druckverlust auch bei dem Verhältnis 1000 nicht unakzeptabel hoch. Das Verhältnis zwischen der Betthöhe **H** in Strömungsrichtung des Gases und dem mittleren Partikeldurchmesser **d** des Schüttguts ist üblicherweise nicht höher als 6000, vozugsweise nicht höher als 3000.

Vorzugsweise genügt die maximale Entladungszeit Δt folgender Relation:

$$0,5 \cdot (M_s/m_G) \cdot (c_s/c_p) \cdot \Delta\theta \leq \Delta t \leq 0,99 \cdot (M_s/m_G) \cdot (c_s/c_p) \cdot \Delta\theta,$$

wobei

$M_s$ die Masse des Schüttgutes,
$m_G$ der Gasdurchfluss,
$c_s$ die spezifische Wärmekapazität der Schüttgutpartikel,
$c_p$ die spezifische Wärmekapazität des Gases,
$\Delta\theta$ = (TPHE-TOT)/(TMAX-TOT) die relative Temperaturdifferenz,
TPHE die mittlere Temperatur des Gases am Austritt aus dem
Hochtemperaturspeicher,
TMAX die maximale Temperatur der gespeicherten
Hochtemperaturwärme
TOT die Temperatur des Gases am Eintritt des Hochtemperaturspeichers ist.

In dieser bevorzugten Ausführungsform liegt die abgegebene Hochtemperaturwärme durch das von TOT auf TPHE aufgeheizte Gas zwischen 50% und 99% der maximal möglichen gespeicherten Hochtemperaturwärme, der Differenzbetrag verbleibt jedoch fast vollständig im Schüttgut.

Das erfindungsgemäße Verfahren ermöglicht die Ausbildung eines sehr vorteilhaften Temperaturprofils innerhalb des Schüttgutbetts dergestalt, dass sich die Temperatur an dem Austritt des Schüttgutbetts relativ wenig ändert, während die Temperaturänderung in der Mitte des Betts relativ hoch ist.

Erfindungsgemäß wird elektrischer Strom in Hochtemperaturwärme umgewandelt, in einem thermischen Speicher gespeichert und nach Bedarf wird ein Gas komprimiert, mit der gespeicherte Wärme aufgeheizt und einer Gasturbine zur Stromerzeugung mit Wärmerekuperation zugeführt.

Erfindungsgemäß speichert man Hochtemperaturwärme, die mit überschüssigem Strom erzeugt wird, in einem Regenerator im Bereich zwischen Eintritts- und Austrittstemperatur einer Gasturbine. Es wird also nicht die Gesamtwärmemenge, die notwendig wäre um die Eintrittstemperatur zu erreichen, benötigt. Die restliche Wärmemenge wird nur kurzzeitig in einem System von 2 oder mehrere Niedrigtemperaturwärmespeichern gespeichert und nur während der Zeit abgegeben, in der das Gasturbinensystem im Betrieb ist und Strom erzeugt. Auf diese Weise kann die Speicherkapazität für die Hochtemperaturwärme reduziert werden und so auch die Investitionskosten für die hochwertige Speichermasse und die entsprechende feuerfeste Isolierung. Gleichzeitig nutzt man den überschüssigen Strom nur für die Hochtemperaturwärme und damit steigt der Gesamtwirkungsgrad des Speichersystems.

Die Turbineneintrittstemperatur TIT liegt bevorzugt in Bereich von 700 °C bis 1300 °C, stärker bevorzugt im Bereich von 800 °C bis 1100 °C und am stärksten bevorzugt im Bereich von 900 °C bis 1000 °C.

Die Turbinenaustrittstemperatur TOT liegt bevorzugt in Bereich von 400 °C bis 750 °C, stärker bevorzugt im Bereich von 450 °C bis 600 °C und am stärksten bevorzugt im Bereich von 500 °C bis 575 °C. Mit dieser Temperatur tritt das Gas auch üblicherweise in den Hochtemperaturspeicher ein.

Die maximale Temperatur der gespeicherten Wärme im Hochtemperaturspeicher TMAX liegt bevorzugt in Bereich von 900 °C bis 1500 °C, stärker bevorzugt im Bereich von 1000 °C bis 1400 °C und am stärksten bevorzugt im Bereich von 1050 °C bis 1300 °C.

Die Temperaturdifferenz zwischen der mittleren Temperatur des Gases am Austritt aus dem Hochtemperaturspeicher TPHE und der Turbineaustrittstemperatur TOT beträgt üblicherweise zwischen 50% und 99% der maximal möglichen Temperaturdifferenz (TMAX - TOT).

In einer anderen Ausführungsform liegt die Temperaturdifferenz zwischen der mittleren Temperatur des Gases am Austritt aus dem Hochtemperaturspeicher TPHE und der Turbineaustrittstemperatur TOT üblicherweise zwischen der maximalen Temperatur der gespeicherten Hochtemperaturwärme TMAX und der Turbineaustrittstemperatur TOT.

In einer weiteren Ausbildungsform der Erfindung, wird der Wärmespeicher so konstruiert, dass er aus mehreren hintereinander geschalteten Heizelementen besteht, die nacheinander angeschlossen werden. Dadurch wird eine partielle Entladung ermöglicht, in der die Wärme nur aus einem Segment des Speichers, entnommen wird. Die gespeicherte Wärme im restlichen Teil des Speichers bleibt wie zuvor auf einem hohen Temperaturniveau.

Eine erfindungsgemäße Betriebsweise besteht darin, dass nach einer partiellen Entladung eine nachfolgende Ladungsphase nur in dem zuvor entladenen Segment stattfindet. Damit wird eine anpassungsfähige, wirtschaftliche Betriebsweise des Speichers ermöglicht.

Für das System von 2 oder mehreren Niedrigtemperaturwärmespeichern kann man billige Wärmespeichermasse und Isolierung nutzen. Darüber hinaus ist die Speicherzeit in diesem System (mit 10 bis 60 Minuten) deutlicht kürzer, so dass die Speicherkapazität und damit auch die Investitionskosten niedrig gehalten werden können.

Um einen hohen Wirkungsrad der Speichersysteme zu erreichen, braucht man keine hoch entwickelte Gasturbine mit Schaufelkühlung, sonder lediglich eine einfache und robuste Turbine, eventuell sogar mit radialer Auslegung, welche für die Turboladertechnologie genutzt wird. Die optimalen Druckverhältnisse sind natürlich von der Eintrittstemperatur abhängig, aber sie liegen deutlich niedriger (im Bereich 2 bis 7) als beim klassischen Joule-Zyklus ohne Wärmerückgewinnung.

Abhängig von der Turbinenkonstruktion und den Prozessparametern, beträgt der Gesamtwirkungsgrad (von Strombeladung bis Stromentladung oder "round-trip efficiency") 35% bis 65%. Mit den Modellen, die heutzutage auf dem Markt sind, kann man einen Gesamtwirkungsgrad bis zu 45% erreichen. Für noch bessere Werte braucht man eine angepasste Konstruktion und angepasste Prozessparameter, wie mehrfache Zwischenkühlung und höhere Eintrittstemperaturen bei niedrigeren Druckverhältnissen.

Falls auch die Abwärme aus dem Speichersystem genutzt werden kann, steigt der kombinierte Wirkungsgrad (Strom + Wärme) bis auf 90%.

Ein weiterer Vorteil liegt in der schnellen Startfähigkeit einer solchen Anlage. Sobald man den Strom im Netz braucht, wird innerhalb weniger Minuten die volle Leistung erreichen.

In der Ausgestaltung der Erfindung wird eine schnelle Startfähigkeit der Anlage erreicht. Am Ende einer Entladungsphase, wenn die Gasturbine in Betrieb ist und der Hochtemperaturspeicher unter Betriebsdruck steht, werden die entsprechenden Ventile an der Anlage in einer Reihenfolge geschlossen, dass der Hochtemperaturspeicher und die Turbine nahezu unter Betriebsdruck bleiben. Bei einer neuen Entladungsphase kann die Turbine deutlich schneller in Betrieb gehen, weil nicht nur hohe Temperaturen, sonder auch den Betriebsdruck schon zur Verfügung stehen. Die Menge des unter Druck gespeicherten Gases reicht aus bis der Kompressor seine volle Leistung und seinen vollen Druck erreicht hat. Auf diese Weise kann der Start der Turbine z.B. unter 30 Sekunden erfolgen womit auch eine Teilnahme an der primären Regelleistung möglich wird.

Eine Anlage für die vorliegende Erfindung besteht aus folgenden Komponenten und Verfahrensschritten:

- Kompressor für die Verdichtung des Arbeitsmediums (Gas)
- Gasturbine für die Expansion von verdichtetem und vorgewärmtem Arbeitsmedium und Gewinnung von mechanischer Arbeit
- Stromgenerator für die Stromerzeugung aus der netto-gewonnenen mechanischen Arbeit (Differenz zwischen der gewonnenen Leistung der Turbine und der verbrauchten Leistung des Kompressors)
- Mindestens zwei Niedrigtemperaturwärmespeicher für die Rekuperation / Ausnutzung des Wärmegehalts des Turbinenabgases
- Entsprechende Umschaltorgane für den Wechsel zwischen den Niedrigtemperaturspeichern
- Hochtemperaturspeicher für die Speicherung der Wärme aus überschüssigem Strom
- Abgaskamin.

In Zeiten mit Stromüberschuss im Netz heizt man den Hochtemperaturspeicher mit diesem Strom vom Temperaturniveau am Turbinenaustritt auf das Temperaturniveau am Turbineneintritt auf. Abhängig von dem Netzzustand und der Auslegungskapazität kann diese Phase von mehreren Minuten, über mehreren Stunden bis zu mehreren Tagen dauern. Wenn Strom wieder im Netz gebraucht wird, startet man das Gasturbinen-Set (Kompressor, Expander, Stromgenerator). Dabei wird zunächst das komprimierte Gas in einem Niedrigtemperaturspeicher bis auf Turbinenaustrittstemperatur vorgewärmt und anschließend im

Hochtemperaturspeicher auf die Turbineneintrittstemperatur geheizt. Dieses heiße komprimierte Gas entspannt sich in der Turbine und der Stromerzeugung. Das entspannte Gas hat noch immer einen großen Wärmeinhalt und wird zunächst in einem zweiten Niedrigtemperaturspeicher weiter abgekühlt. Nach einer gewissen Zeit wird der erste Niedrigtemperaturspeicher abgekühlt und der zweite wieder aufgeheizt, so dass eine Umschaltung stattfindet. Diese Zeiten liegen im Minuten- bis Stundenbereich (üblicherweise zwischen 10 und 60 Minuten), abhängig von den Auslegungs- und Betriebsparametern. Eine Stromüberschussphase und eine Stromerzeugungsphase müssen nicht direkt aufeinander folgen - zwischen ihnen können bis zu mehrere Tage liegen.

Weitere Ausgestaltung der Erfindung

In einer vorteilhaften Ausgestaltung der Erfindung ist als Gas-Arbeitsmedium die Umgebungsluft zu nutzen. In besonderen Fällen kann man auch ein anderes Gas nutzen, wie z.B. Stickstoff oder Kohlendioxid.

In einer Weiterentwicklung der Erfindung strömt die durch Verdichtung vorgewärmte Luft durch einen Gaskühler, der sich vor dem ersten Niedrigtemperaturspeicher befindet. Damit kann man die Abwärme für eine Heizung, Prozesswärme oder andere Zwecke gewinnen, und gleichzeitig die Abgastemperatur und die Abgasverluste am Kamin minimieren.

In einer weiteren vorteilhaften Ausführung kann man statt in einem rekuperativen Gaskühler das Gas durch eine evaporative Kühlung mit Wassereindüsung konditionieren. Damit steigen der Durchfluss durch die Turbine und ihre Leistung, so dass mehr Nettoleistung für die Stromerzeugung bleibt. Das hat einen erheblichen Einfluss auf den Gesamtwirkungsgrad des Speicherprozesses.

Bei einer weiteren vorteilhaften Ausführungsform sind der Eintritt und der Austritt aus dem Hochtemperaturspeicher durch eine Bypass-Leitung mit einem steuerbaren Ventil miteinander verbunden, so dass man die Turbineneintrittstemperatur regeln kann. Das bringt zweierlei Vorteile: erstens kann man auf diese Weise die Turbinenleistung regeln, und zweitens kann man in dem Hochtemperaturspeicher Wärme mit höheren Temperatur als die Turbineneintrittstemperatur speichern. Dieser zweite Vorteil bedeutet höhere Speicherkapazität bei gleichen Abmessungen und Masse des Speichers und damit niedrigere spezifische Investitionskosten.

In einer weiteren vorteilhaften Weiterentwicklung der Erfindung ist am Austritt aus dem Hochtemperaturspeicher eine Brennstoffzufuhr nachgeschaltet, so dass man eine relativ kleine Menge Erdgas oder einen anderen gasförmigen oder flüssigen Brennstoff zugeben kann, um die Gastemperatur vor dem Turbineneintritt zu erhöhen. Auf diese Weise kann man länger als geplant, falls die Netzbedingungen das verlangen, Strom erzeugen, trotz stärkeren Temperaturabfalls des Gases am Austritt aus dem Hochtemperaturspeicher.

Vorteilhaft ist es, drei oder mehrere Niedrigtemperaturspeicher zu nutzen, um eine sanfte Umschaltung zwischen zwei Betriebsphasen, ohne Druckstöße, zu ermöglichen. Die Zahl von Speichern ist vom Betriebsdruck und der Kapazität der Anlage abhängig. Mit mehreren Speichern kann man den Druckverlust in beiden Betriebsphasen ausgleichen, so dass in der Phase mit niedrigerem Betriebsdruck mehr als eine Einheit eingeschaltet ist, mit der entsprechender Durchflussreduzierung durch jede Einheit und einer Verlängerung der Phasenzeit. Solche Umschaltprozesse sind schon aus der DE 100 39 246 C2 oder der DE 10 2009 038 322 A1 bekannt.

Bei sehr großen Stromspeicherkapazitäten einer Anlage ist es vorteilhaft, mehrere Hochtemperaturspeicher zu installieren, um die Abmessungen jeder Einheit zu reduzieren und die Investitionskosten zu minimieren. In diesem Falle braucht man zusätzliche Umschaltorgane zwischen den Hochtemperaturspeichern. Vorteilhaft kann man diese Umschaltorgane vor (und nicht nach) den einzelnen Hochtemperaturspeicher, wo die Temperaturen deutlich niedriger sind, platzieren. Damit kann man Investitionskosten sparen und gleichzeitig die Lebenserwartung dieser Organe verlängern.

Niedrigtemperaturspeicher sind auch zur Abgabe der gespeicherten thermischen Energie, zum Beispiel in Form von warmer Luft, geeignet. Wegen der niedrigeren Investitionskosten und dem sehr guten Wärmeübergang sind Schüttgutregeneratoren als Niedrigtemperaturspeicher besonders zweckmäßig. Insbesondere können Schüttgutregeneratoren eingesetzt werden, die aus der EP 0620 909 B1 oder der DE 42 36 619 C2 bekannt sind. Naturbelassenes Material, wie Kies, Eifel-Lava oder Kalksplitt, wird als Wärmespeichermasse für die Niedrigtemperaturspeicher als Schüttgut verwendet.

Hochtemperaturspeicher sind auch zur Abgabe der gespeicherten thermischen Energie, zum Beispiel in Form von Heißluft, geeignet. Besonders Schüttgutregeneratoren sind als Hochtemperaturspeicher geeignet. Es können auch Schüttgutregeneratoren eingesetzt werden, die aus der EP 0620 909 B1 oder der DE 42 36 619 C2 bekannt sind. Aber wegen der höheren Temperaturen, auch an den kalten Seiten des Regenerators, ist eine einfachere Auslegung besser geeignet. Beispielsweise kann das Schüttgutbett so gebildet werden, dass das Schüttgut in einer Säule angeordnet ist, die wiederum stehend oder liegend angeordnet ist.

Das Schüttgut für die Hochtemperaturwärmespeicher besteht vorzugsweise aus Keramik, Aluminium-Oxid, Schamott, Silizium-Carbid, Zirkonium-Oxid, Graphit, Lava-Gestein, Kies, Eisenerz, Kalk, metallischen Partikel oder Kombinationen davon. Die Partikel des Schüttguts können kugelförmig und/oder in Form von Bruch oder Schotter sein. Vorteilhaft sind die eingesetzten Partikel ungefähr gleichförmig.

Der mittlere Partikeldurchmesser des Schüttgutes sollte nicht größer als 50 mm sein, bevorzugt nicht größer als 40 mm, stärker bevorzugt nicht größer als 30 mm und am stärksten bevorzugt nicht größer als 15 mm.

Der mittlere Partikeldurchmesser des Schüttgutes beträgt üblicherweise mindestens 2 mm, bevorzugt mindestens 5 mm, stärker bevorzugt mindestens 7 mm, am stärksten bevorzugt mindestens 10 mm.

Die Heizelemente werden für die Umwandlung elektrischer Energie in Wärme, die im Hochtemperaturspeicher erfolgt, direkt in die Schüttung eingesetzt, und zwar in Form von übereinander liegenden Spiralen. Der horizontale Abstand zwischen dem Draht in einer Spirale muss ungefähr der gleiche sein wie der vertikale Abstand zwischen zwei Spiralen, um einen gleichmäßigen Wärmetransport zu ermöglichen.

Um die gewünschte elektrische Leistung und einen nominalen Wärmeabfluss von der Drahtoberfläche zu bekommen, muss man ein optimales Verhältnis zwischen spezifischem Drahtwiderstand, Drahtdurchmesser und Gesamtlänge der Spirale erreichen. Es wird vorteilhaft sein, mehrere oder alle Spiralen in einem Hochtemperaturspeicher miteinander zu verbinden, um die Leitungslänge zu erhöhen.

Als Heizdraht kann man einen Draht aus Edelstahl oder hitzebeständigem Stahl wählen, abhängig von der Temperatur und dem eingesetztem Gas / Arbeitsmedium.

Die Vorteile der Erfindung werden als Ausführungsbeispiele in den folgenden Figuren erläutert und nachfolgend beschrieben. Dabei zeigen:

**Fig. 1** ein schematisches Blockdiagramm mit allen Hauptkomponenten der Anlage und ihren Verbindungen;

**Fig. 2a** und **Fig. 2b** das gleiche Blockdiagramm wie **Fig. 1** aber mit angezeigten Strömungswegen des Gases während der Stromerzeugungsphasen;

**Fig. 3a, 3b** ein schematisches Blockdiagramm des Verfahrens mit eingedeutetem Volumen in dem das Betriebsmedium während des Turbinenstillstands unter hohem Druck gespeichert ist;

**Fig. 4** eine vorteilhafte Temperaturverteilung während einer Entladenphase in einer Schüttung mit dem Verhältnis Betthöhe / Partikeldurchmesser von 1000;

**Fig. 5** eine vorteilhafte Ausführung der elektrischen Heizung in drei verschiedenen Segmenten des Schüttgutes;

**Fig. 6** die Heizelemente im Hochtemperaturspeicher **5** in Form von übereinander liegenden und miteinander verbundenen Spiralen;

**Fig. 7** Bypass-Leitung mit Bypass-Ventil **9**; und

**Fig. 8** Zuführung von Erdgas **NG** oder von anderen gasförmigen oder flüssigen Brennstoffen **10**.

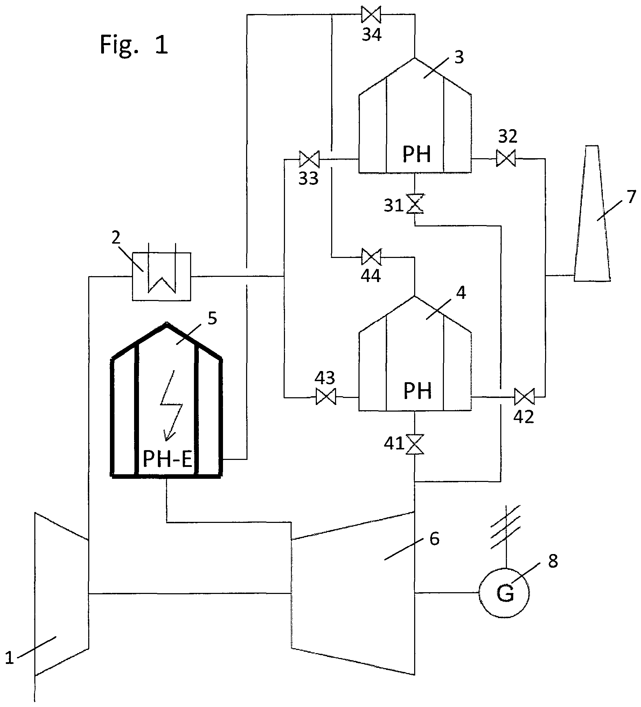

**Fig. 1** zeigt ein schematisches Flussdiagramm des Systems für die thermische Speicherung überschüssigen Stroms, und seine Wiedererzeugung bei Strommangel im Netz. Dieses System beinhaltet ein Gasturbinenset mit Kompressor **1**, Turbine **6** und Stromgenerator **8,** einen Hochtemperaturspeicher **5,** zwei kleinere Niedrigtemperaturspeicher **3, 4** mit entsprechenden Umschaltorganen **31-34** und **41-44**, sowie einen Gaskühler **2** und Ablasskamin **7**.

Während einer Stromspeicherphase wird der Hochtemperaturspeicher **5** mit Strom von der Turbinenaustrittstemperatur **TOT** auf mindestens Turbineneintrittstemperatur **TIT** geheizt. Dabei kann diese Umwandlung von elektrischer in thermische Energie durch Stromwiderstand oder durch Induktion erfolgen. Diese Phase kann mehrere Minuten, Stunden oder Tage dauern, abhängig von dem Stromnetzbedarf und den entsprechenden Auslegung der Komponenten.

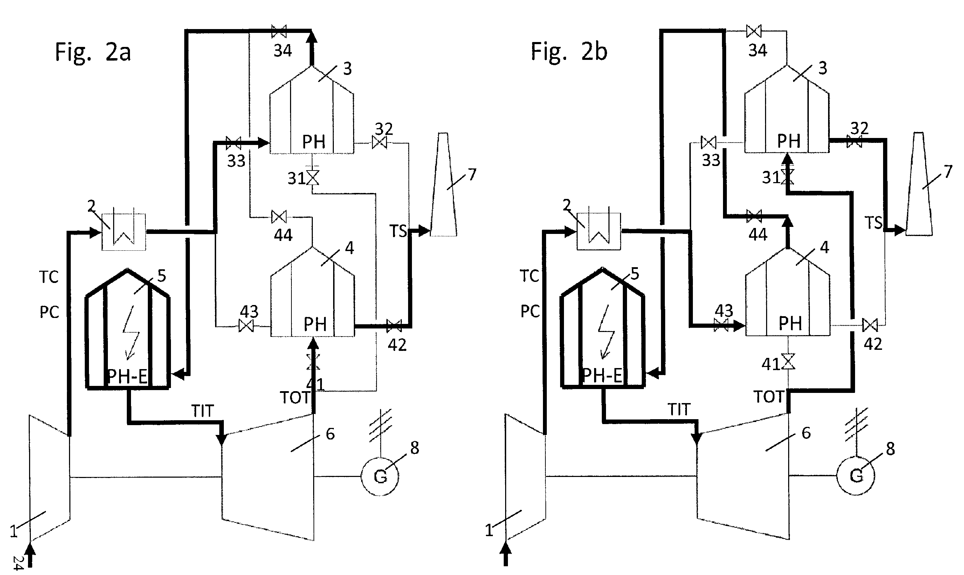

**Fig. 2a** zeigt die Strömungswege des Gases während einer Stromerzeugungsphase. Im Kompressor **1** wird die Umgebungsluft auf einen Druck **PC** verdichtet und dadurch auf eine Temperatur **TC** aufgeheizt, die deutlich oberhalb der Umgebungstemperatur liegt. Um diese Wärme auszunutzen und gleichzeitig die Kaminverluste zu minimieren, wird die komprimierte Luft im Gaskühler **2** gekühlt und die gewonnene Wärme für Heizung oder andere Zwecke genutzt. Wenn die Umschaltorgane **33** und **34** geöffnet sind, strömt die abgekühlte Luft durch einen ersten Niedrigtemperaturspeicher **3**, wo sie durch gespeicherte Wärme auf eine Temperatur nahe Turbinenaustrittstemperatur **TOT,** aber deutlich höher als **TC,** aufgeheizt wird. Die so vorgewärmte Luft strömt durch den Hochtemperaturspeicher **5,** wo ihre Temperatur durch die gespeicherte Hochtemperaturwärme elektrischer Herkunft weiter auf mindestens Turbineneintrittstemperatur **TIT** steigt. Komprimierte Luft mit der Temperatur **TIT** tritt in die Turbine **6** ein, wo die Expansion auf den Umgebungsdruck stattfindet, wodurch die Temperatur auf den Wert **TOT** sinkt. Da die Umschaltorgane **41** und **42** ebenfalls geöffnet sind, strömt die entspannte Luft durch einen zweiten

Niedrigtemperaturspeicher **4**, gibt ihre Wärme an der Speichermasse ab, kühlt sich auf Temperatur **TS** ab und verlässt das System durch einen Kamin **7**.

Nach einer gewissen Zeit, die in der Regel zwischen 10 und 60 Minuten beträgt, schließen sich die Umschaltorgane **33**, **34**, **41** und **42** und öffnen sich die Umschaltorgane **31**, **32**, **43** und **44**, so dass die Niedrigtemperaturspeichern **3** und **4** ihre Rollen wechseln, wie in **Fig. 2b** gezeigt.

Statt die komprimierte Luft in einem konvektiven Wärmetauscher **2** zu kühlen, kann man Wasser eindüsen und durch Wasserverdampfung kühlen. Damit verliert man die Möglichkeit, die anfallende Abwärme zu nutzen, aber gleichzeitig steigt der Massenstrom durch die Turbine 6 und damit die Leistung und besonders der Gesamtwirkungsgrad des Prozesses.

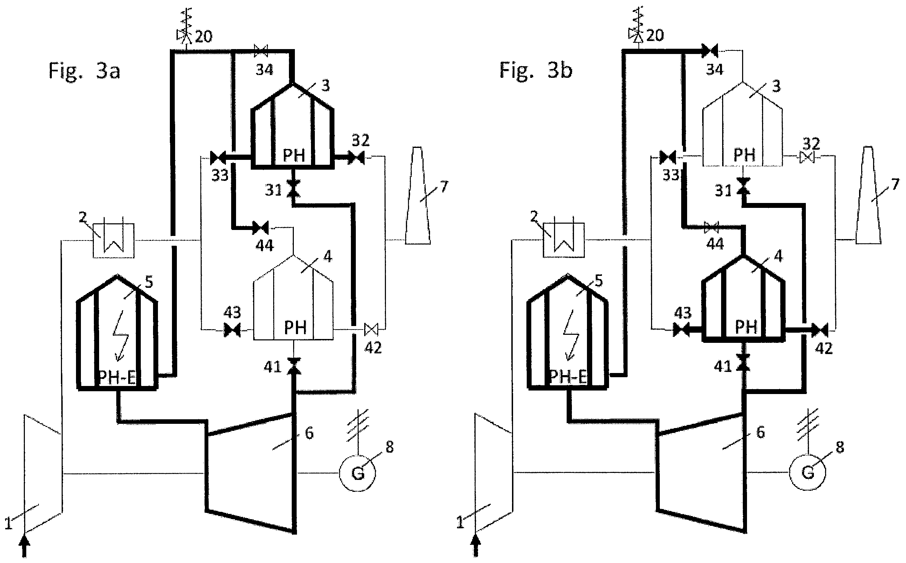

**Fig. 3a** und **Fig. 3b** zeigen die Betriebsweise dieses Systems die eine schnelle Startfähigkeit ermöglicht. Am Ende einer Entladungsphase, wenn die Gasturbine **6** in Betrieb ist, der Hochtemperaturspeicher **5** unter Betriebsdruck ist und währenddessen der Niedrigtemperaturspeicher **3** unter Druck ist (**Fig. 3a**), werden die Ventile **41** und **33**, in dieser Reihenfolge langsam geschlossen, so dass Hochtemperaturspeicher **5**, Niedrigtemperaturspeicher **3** und die Turbine **6** nahezu unter Betriebsdruck bleiben. Falls am Ende einer Entladungsphase der Niedrigtemperaturspeicher **4** unter Druck ist, (**Fig. 3b**) erfolgt das gleiche mit den Ventilen **31** und **43**, mit dem Ergebnis, dass jetzt Hochtemperaturspeicher **5**, Niedrigtemperaturspeicher **3** und die Turbine **6** unter nahezu Betriebdruck bleiben. Dabei wird die Regelgröße für die Ventile **41** und **31** der maximale Betriebsdruck der Turbine sein. Man schließt einen der zwei Ventile, bis dieser Druck erreicht ist. Falls dieser Druck erreicht oder überschritten wird, bevor das entsprechende Ventil vollständig geschlossen ist, wird das Ventil in der Position bleiben, bis der Druck wieder unter Betriebsdruck fällt.

Bei den Ventilen **33** und **43** ist die Regelgröße die Druckdifferenz. Man schließt eines der zwei Ventile so, dass die Differenz zwischen dem Druck nach dem Kompressor **1** und dem Betriebsdruck der Turbinen **6** möglichst klein ist. Falls der Druck nach dem Kompressor größer als der Betriebsdruck ist, werden die Ventile in der Position bleiben, bis der Druck wieder zu fallen beginnt.

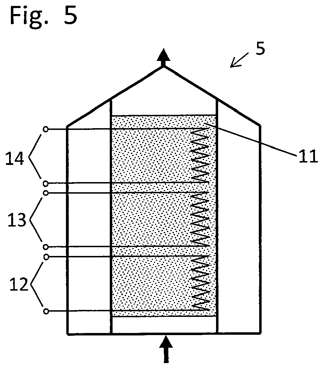

Wenn alle diese Ventile geschlossen sind, wird in dem Volumen dazwischen das Betriebsmedium, bzw. die Luft, unter Betriebsdruck gespeichert. In **Fig. 3a** und **3b** ist dieses Volumen mit dicken Linien dargestellt. Wenn die Heizelemente **12, 13** und/oder **14** (siehe **Fig. 5**) wieder eingeschaltet sind, steigt die mittlere Temperatur in diesem geschlossenen Volumen, und so auch der Druck. Deswegen ist es notwendig, ein zusätzliches Sicherheitsventil **20** einzubauen. Das Sicherheitsventil **20** kann auch am Austritt der Turbine **6** eingebaut werden, um die Temperatur dort besser zu erhalten und einen sanfteren Neustart zu ermöglichen.

Bei einer neuen Entladungsphase (sh. **Fig. 3a**) wird sich das Ventil **41** langsam öffnen, so dass die Turbine **6** zu rotieren beginnt und den Kompressor **1** antreibt. Wenn der Kompressor **1** ausreichend hohen Druck liefert, wird sich das Ventil **33** auch öffnen, so dass weiterhin ein nominaler Turbinenbetrieb erfolgen kann.

Falls man Bedingungen wie in **Fig. 3b** hat, wird sich erst das Ventil **31** öffnen, und dann das Ventil **43**. Auf diese Weise, kann der Turbinenstart, in beiden gezeichneten Fällen, auch unter 30 Sekunden erfolgen, was eine Vorbedingung für die Teilnahme an der primären Regelleistung ist.

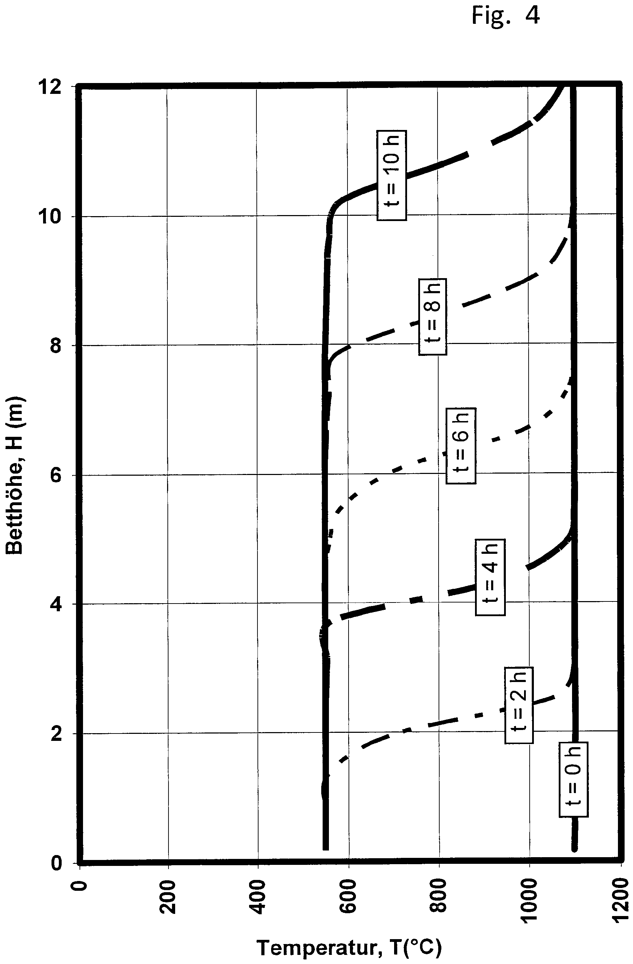

**Fig. 4** zeigt die vorteilhaften, S-förmige, Temperaturprofile während der Entladung eines 12m hohen Hochtemperaturspeichers, mit 12mm großen Kugeln aus Aluminium-Oxid als Schüttgut. Damit ist das **H/d** Verhältnis 1000. Bei maximaler Speicherung herrscht im Wärmespeicher eine gleichmäßige Temperatur von 1100°C (t=0h). Die Entladungsphase startet, indem die auf 550°C vorgewärmte Luft von unten eintritt, auf 1100°C sich aufgewärmt wird und den Wärmespeicher von oben in Richtung eine Gasturbine verläst. Außerhalb des Speichers mischt sie sich mit ungefähr gleicher Menge auf 550°C vorgewärmter Luft um die richtige Turbineneintrittstemperatur (TIT) von z.B. 830°C zu erreichen. Nach 2 Stunden Entladungszeit ist die Temperatur in der Schüttung oberhalb 3m weiterhin konstant bei 1100°C. Zwischen der Höhe 1m und 3m gibt es ein sehr steiles Temperaturprofil.

Nach 4, 6 und 8 Stunden ist es sehr ähnlich, nur die Steigung des Profils nimmt leicht ab. Nach 10 Stunden ununterbrochener Entladung sinkt die Austrittstemperatur leicht unter 1100°C, sie liegt jedoch noch immer über der Turbineneintrittstemperatur, die üblicherweise zwischen 830°C und 970° beträgt. Ohne ein solches vorteilhaftes Temperaturprofil, das durch die oben beschriebenen Charakteristika des Schüttgutbettes erreicht wird, fällt die Austrittstemperatur viel schneller ab und bildet letztlich ein lineares Temperaturprofil. Die Entladungsphase muss beendet werden, wenn die Austrittstemperatur unter Turbineneintrittstemperatur fällt, obwohl noch immer Hochtemperaturwärme im Speicher vorhanden ist.

Falls die Entladenzeit kürzer als 10 Stunden, beispielsweise 2 oder 4 Stunden, beträgt, ist es nicht sinnvoll die oberen Segmente des Speichers **5** zu heizen, da es zur Überhitzung dieser Zonen oder zur Beschädigung der Heizelemente kommen kann. Dann ist es vorteilhaft mehrere Heizelemente, die unabhängig voneinander betrieben werden, über die Gesamthöhe zu verteilen. In **Fig. 5** sind z.B. 3 solche Heizelemente **12**, **13** und **14** dargestellt. Dann ist es nach einer Entladungsphase von weniger als 4 Stunden ausreichend, dass nur das untere Heizelement **12** während einer Ladephase eingeschaltet wird. Nach einer Entladungsphase von bis zu 8 Stunden werden die zwei unteren Heizelemente **12**, **13** eingeschaltet und nur bei einer vollständigen Entladung des Speichermediums **11** im Speicher **5** werden alle drei Heizelemente **12**, **13**, **14** in Betrieb genommen. Für eine solche Betriebsweise ist das oben aufgeführte S-förmige Temperaturprofil nicht nur vorteilhaft, sondern unerlässlich.

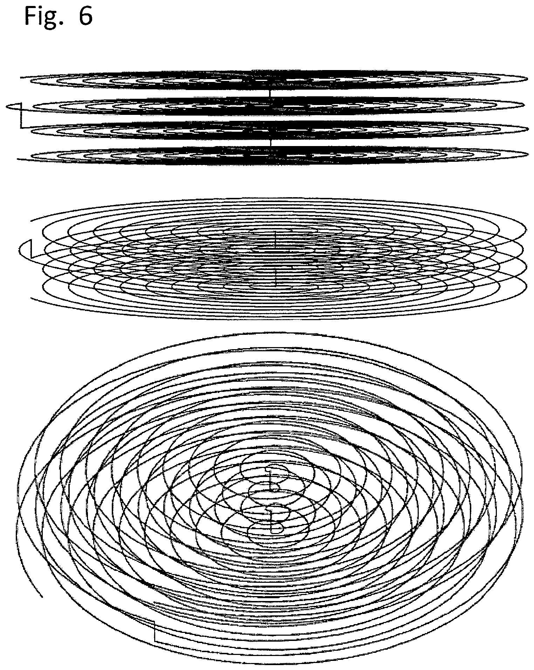

Eine mögliche vorteilhafte Ausführung der elektrischen Heizelemente in Form übereinander liegender und miteinander verbundener Spiralen ist in **Fig. 6** dargestellt. Diese Anordnung ist besonders vorteilhaft für das Schüttgut als Wärmespeichermasse, weil es sich frei und gleichmäßig rund um die Spiralen verteilen kann. Um die Gesamtlänge der Heizleitungen zu erhöhen sind die Spiralen in der Mitte, bzw. am Ende miteinander verbunden. Hier sind beispielsweise vier Spiralen in drei verschiedenen Perspektiven gezeigt, um die genannten Verbindungsstellen besser darzustellen.

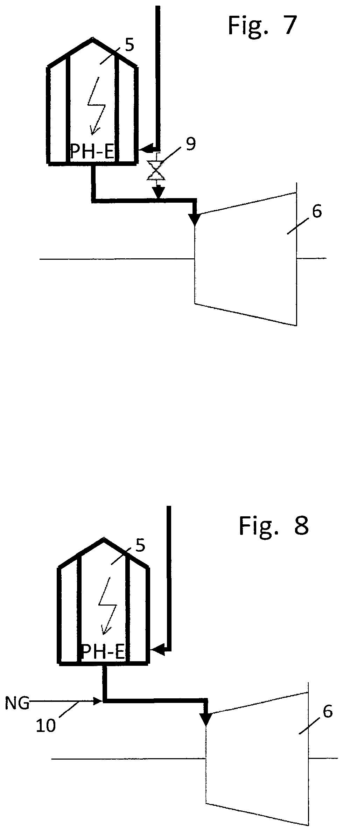

**Fig. 7** zeigt eine Bypass-Leitung mit einem Bypass-Ventil **9** um den Hochtemperaturspeicher **5** mit einem Teilstrom zu umgehen, um eine Turbineneintrittstemperatur **TIT** zu bekommen, die niedriger als die Austrittstemperatur aus dem Hochtemperaturspeicher **5** ist. Auf diese Weise kann man im Hochtemperaturspeicher **5** noch höhere Temperaturen speichern und so seine Wärmekapazität erhöhen. Darüber hinaus kann man mit Bypass-Ventil **9** die Leistung der Turbine **6** regeln.

**Fig. 8** stellt die Möglichkeit dar, durch eine Leitung **10** eine Menge Erdgas **NG** oder anderen gasförmigen oder flüssigen Brennstoff in die Leitung zwischen den Hochtemperaturspeicher **5** und die Turbine **6** zuzugeben, um eine höhere Turbineneintrittstemperatur **TIT** zu erreichen. Das ist vom Interesse, falls die Entladungszeit wegen der Bedingungen im Stromnetz länger als geplant dauert und die Lufttemperatur aus dem Hochtemperaturspeicher unter die nominale Turbineneintrittstemperatur **TIT** sinkt.

Sämtliche Merkmale, die in den Anmeldungsunterlagen offenbart sind, werden als erfindungswesentlich beansprucht, sofern sie einzeln oder in Kombination neu gegenüber dem Stand der Technik sind.

Bezugszeichenliste

| | |
|---|---|
| **1** | Kompressor |
| **2** | Wärmetauscher, Gaskühler |
| **3** | Erster Niedrigtemperaturspeicher |
| **4** | Zweiter Niedrigtemperaturspeicher |
| **5** | Hochtemperaturspeicher, elektrisch beheizt |
| **6** | Turbine, Gasexpander |
| **7** | Kamin |
| **8** | Stromgenerator |
| **9** | Bypass-Leitung mit Bypass-Ventil |
| **10** | Zuführung von Erdgas oder eines anderen gasförmigen oder flüssigen Brennstoffes |
| **11** | Wärmespeichermedium des Hochtemperaturspeichers |
| **12** | Erstes (unterstes) Heizelement |
| **13** | Zweites (mittleres) Heizelement |
| **14** | Drittes (oberstes) Heizelement |
| **20** | Sicherheitsventil (Überdruckventil) |
| **31, 32, 33, 34** | Umschaltorgane am ersten Niedrigtemperaturspeicher |
| **41, 42, 43, 44** | Umschaltorgane am zweiten Niedrigtemperaturspeicher |
| **PH-E** | Elektrisch beheizter Hochtemperaturspeicher |
| **PH** | Niedrigtemperaturspeicher |
| **PC** | Druck nach dem Kompressor |
| **TC** | Temperatur nach dem Kompressor |
| **TIT** | Turbineneintrittstemperatur |
| **TOT** | Turbinenaustrittstemperatur |
| **TMAX** | die maximale Temperatur der gespeicherten Hochtemperaturwärme |
| **TPHE** | die mittlere Temperatur des Gases am Austritt aus dem Hochtemperaturspeicher |
| **TS** | Temperatur am Kamin |
| **NG** | Erdgas oder ein anderer gasförmiger oder flüssiger Brennstoff |

**Patentansprüche**

1. Verfahren zur Stromspeicherung durch die Konversion in thermische Energie und anschließende Stromerzeugung mittels

  - eines Gasturbinesets mit Kompressor (**1**), Expander (**6**) und Stromgenerator (**8**),
  - mit wenigstens einem ersten (**3**) und einem zweiten (**4**) Niedrigtemperaturspeicher,
  - und eines Hochtemperaturspeichers (**5**) mit einem Schüttgut als Wärmespeicher (**11**)

, wobei die elektrische Energie in Form von Hochtemperaturwärme oberhalb der Turbineaustrittstemperatur **TOT** in einem Hochtemperaturspeicher (**5**) gespeichert wird und während der Stromerzeugungsphase ein komprimiertes Gas aus dem Kompressor (**1**) in einem Niedrigtemperaturspeicher (**3, 4**) auf eine Temperatur nahe der Turbineaustrittstemperatur **TOT** aufgeheizt wird und danach in einem Hochtemperaturspeicher (**5**) mit gespeicherter Wärme aus Strom auf ein Temperaturniveau von mindestens Turbineeintrittstemperatur **TIT** aufgeheizt wird, **dadurch gekennzeichnet dass** das Verhältnis zwischen Betthöhe in Strömungsrichtung und dem mittleren Partikeldurchmesser des Schüttgutes (**11**) in dem Hochtemperaturspeicher (**5**) mindestens 10, bevorzugt mindestens 100, stärker bevorzugt mindestens 250, noch stärker bevorzugt mindestens 500 und besonders bevorzugt mindestens 1000 beträgt, und dass am Ende eine Entladungsphase, bevor die Gasturbine (**6**) zum Stillstand kommt, Ventile (**41**) und (**33**), bzw. Ventile (**31**) und (**43**), auf so eine Weise geschlossen werden, dass Hochtemperaturspeicher (**5**), Niedrigtemperaturspeicher (**3**), bzw. Niedrigtemperaturspeicher (**4**), und die Turbine (**6**) nahezu unter Betriebdruck bleiben.

2. Verfahren nach Anspruch 1, **dadurch gekennzeichnet, dass** die Entladungszeit Δt aus dem Hochtemperaturspeicher (**5**) folgender Relation genügt:

$$0,5 \cdot (M_s/m_G) \cdot (c_s/c_p) \cdot \Delta\theta \le \Delta t \le 0,99 \cdot (M_s/m_G) \cdot (c_s/c_p) \cdot \Delta\theta$$

wobei: $M_s$ die Masse des Schüttgutes (**11**), mc der Gasdurchfluss, $c_s$ die spezifische Wärmekapazität der Schüttgutpartikel, $c_p$ die spezifische Wärmekapazität des Gases, $\Delta\theta$ = (TPHE-TOT)/(TMAX-TOT) die relative Temperaturdifferenz, TPHE die mittlere Temperatur des Gases am Austritt aus dem Hochtemperaturspeicher (**5**), TMAX die maximale Temperatur der gespeicherten Hochtemperaturwärme und TOT die Temperatur des Gases am Eintritt des Hochtemperaturspeichers ist.

3. Verfahren nach Anspruch 1 oder 2, **dadurch gekennzeichnet, dass** die Abkühlung in dem Hochtemperaturspeicher (**5**) während einer Stromerzeugungsphase nur bis zur Turbinenaustrittstemperatur **TOT** begrenzt wird.

4. Verfahren nach einem der vorher genannten Ansprüche, **dadurch gekennzeichnet, dass** das komprimierte Gas mindestens einem Wärmetauscher (**2**) zugeführt wird, um die gewonnene Abwärme als nutzbare Wärme auszukoppeln.

5. Verfahren nach einem der vorher genannten Ansprüche, **dadurch gekennzeichnet, dass** das verdichtete Gas durch Wassereindüsung abgekühlt wird.

6. Verfahren nach einem der vorher genannten Ansprüche, **dadurch gekennzeichnet, dass** der Hochtemperaturspeicher (**5**) mittels Strom auf eine Temperatur oberhalb der Turbineneintrittstemperatur **TIT** aufgeheizt wird.

7. Verfahren nach einem der vorher genannten Ansprüche, **dadurch gekennzeichnet, dass** die Umwandlung von elektrischer Energie in die Hochtemperaturwärme für den Hochtemperaturspeicher (**5**) über einen Stromwiderstand oder über Induktion stattfindet.

8. Verfahren nach einem der vorher genannten Ansprüche, **dadurch gekennzeichnet, dass** eine elektrische Heizung des Hochtemperaturspeichers (**5**) in mindestens zwei, bevorzugt mehreren, über die Gesamthöhe verteilte Segmenten stattfindet.

9. Verfahren nach einem der vorher genannten Ansprüche, **dadurch gekennzeichnet, dass** mittels einer Bypass-Leitung und eines Bypass-Ventils (**9**) die Turbineneintrittstemperatur und die Turbinenleistung geregelt werden können.

10. Verfahren nach einem der vorher genannten Ansprüche, **dadurch gekennzeichnet, dass** während der Stromerzeugungsphase das Gas, das als Arbeitsmedium dient, Luft oder ein anderes sauerstoffhaltiges Gas ist.

11. Verfahren nach einem der vorher genannten Ansprüche, **dadurch gekennzeichnet, dass** vor dem Eintritt in die Turbine, eine Menge von Erdgas (**10**) oder einem anderen gasförmigen oder flüssigen Brennstoff zugeführt wird.

12. Vorrichtung für die Stromspeicherung durch die Umwandlung in thermische Energie und anschließende Stromerzeugung, die Vorrichtung umfassend ein Gasturbinenset mit Kompressor (**1**), Expander (**6**) und Stromgenerator (**8**), mit wenigstens einem ersten (**3**) und einem zweiten (**4**) Niedrigtemperaturwärmespeicher, wobei mindestens ein Hochtemperaturspeicher **(5)** nachgeschaltet ist, welcher zur Erhitzung des Arbeitsmediums nach dem Niedrigtemperaturspeicher **(3, 4)** auf Turbineneintrittstemperatur **TIT** dient, **dadurch gekennzeichnet, dass** dieser so eingerichtet ist, dass in dem Schüttgut das als Wärmespeichermedium **(11)** dient, das Verhältnis zwischen Betthöhe in Strömungsrichtung und dem mittleren Partikeldurchmesser mindestens 10, bevorzugt mindestens 100, stärker bevorzugt mindestens 250, noch stärker bevorzugt mindestens 500 und besonders bevorzugt mindestens 1000 beträgt, und dass integrierte Heizelemente im Hochtemperaturspeicher aus übereinander liegenden Spiralen bestehen.

**13.** Vorrichtung nach Anspruch 12,
**dadurch gekennzeichnet, dass** nach dem
Kompressor **(1)** ein Wärmetauscher **(2)** nachgeschaltet ist, welcher das Arbeitsmedium abkühlt und die gewonnene Abwärme als nutzbare Wärme auskoppelt.

**14.** Vorrichtung nach Anspruch 12 oder 13,
**dadurch gekennzeichnet, dass** nach
dem Kompressor **(1)** eine Wassereindüsung vorgesehen ist.

**15.** Vorrichtung nach wenigstens einem der Ansprüche 12-14,
**dadurch gekennzeichnet, dass** zwischen Eintritt und Austritt aus dem Hochtemperaturspeicher **(5)** eine Bypass-Leitung mit einem Bypass-Ventil (9) nachgeschaltet ist.

**16.** Vorrichtung nach wenigstens einem der Ansprüche 12-15,
**dadurch gekennzeichnet, dass** vor dem Eintritt in die Turbine **(6)** eine Leitung **(10)** für die Brennstoffzufuhr vorgesehen ist.

**17.** Vorrichtung nach wenigstens einem der Ansprüche 12-16,
**dadurch gekennzeichnet, dass** ein Umschaltorgan zum wechselweise Einschalten wenigstens eines ersten **(3)** Niedrigtemperaturwärmespeichers und wenigstens eines zweiten **(4)** Niedrigtemperaturwärmespeichers in dem Leitungszweig nach der Turbine **(6)**, bzw. nach dem Kompressor **(1)**, vorgesehen ist.

**18.** Vorrichtung nach wenigstens einem der Ansprüche 12-17,
**dadurch gekennzeichnet, dass** Schüttgutregeneratoren als Niedrigtemperaturspeicher **(3, 4)** eingesetzt werden.

**19.** Vorrichtung nach wenigstens einem der Ansprüche 12-18,
**dadurch gekennzeichnet, dass** rekuperative Wärmetauscher anstelle von Niedrigtemperaturspeichern **(3, 4)** eingesetzt werden.

**20.** Vorrichtung nach wenigstens einem der Ansprüche 12-19,
**dadurch gekennzeichnet, dass** der Hochtemperaturspeicher **(5)** aus einem Schüttgutregenerator mit integrierter elektrischer Heizung besteht.

**21.** Vorrichtung nach Anspruch 20,
**dadurch gekennzeichnet, dass** die elektrische
Heizung des Hochtemperaturspeichers **(5)** aus mindestens zwei, bevorzugt mehreren, voneinander unabhängigen, über die Gesamthöhe verteilten Heizelementen **(11, 12, 13)** besteht.

**22.** Vorrichtung nach Anspruch 21,
**dadurch gekennzeichnet, dass** als Heizdraht
der Spirale ein Draht aus Edelstahl oder hitzebeständigem Stahl verwendet wird.

**Claims**

**1.** A method for storing energy by converting into thermal energy and subsequently producing electricity by means of

- a gas turbine set having a compressor (1), expander (6), and electrical generator (8),
by means of at least one first (3) and one second (4) low-temperature store,
- and a high-temperature store (5) having a bulk material as a thermal reservoir (11),

the electrical energy being stored in a high-temperature store (5) in the form of high-temperature heat above the turbine outlet temperature TOT, and during the electricity generation phase, a compressed gas from the compressor (1) being heated to a temperature near the turbine outlet temperature TOT in a low-temperature store (3, 4), and being subsequently heated to a temperature level of at least the turbine inlet temperature TIT by means of heat stored from electricity in a high-temperature store (5), **characterized in that** the ratio between the packing height in the flow direction and the average particle diameter of the bulk material (11) in the high-temperature store (5) is at least 10, preferably at least 100, more preferably at least 250, even more preferably at least 500, and particularly preferably at least 1000,
and that at the end of a discharge phase, before the gas turbine (6) comes to a stop, valves (41) and (33), or valves (31) and (43), are closed in such a manner that the high-temperature store (5), low-temperature store (3) or low-temperature store (4), and the turbine (6) remain nearly under operating pressure.

2. The method according to claim 1, **characterized in that** the discharge time $\Delta t$ from the high-temperature store (5) fulfills the following relation:

$$0.5 \cdot (M_s/m_G) \cdot (C_s/C_p) \cdot \Delta\theta \leq \Delta t \leq 0.9 \cdot (M_s/m_G) \cdot (C_s/C_p) \cdot \Delta\theta$$

where: $M_s$ is the mass of the bulk material (11), $m_G$ is the gas flow rate, $c_s$ is the specific heat capacity of the bulk material particles, $C_P$ is the specific heat capacity of the gas, $\Delta\Theta$ = (TPHE-TOT)/(TMAX-TOT) is the relative temperature difference, TPHE is the average temperature of the gas at the outlet of the high-temperature store (5), TMAX is the maximum temperature of the stored high-temperature heat, and TOT is the temperature of the gas at the inlet of the high-temperature store.

3. The method according to claim 1 or 2, **characterized in that** the cooling in the high-temperature store (5) during an electricity generation phase is limited only to the turbine outlet temperature TOT.

4. The method according to any one of the preceding claims, **characterized in that** the compressed gas is fed to at least one heat exchanger (2) in order to draw off the waste heat produced as usable heat.

5. The method according to any one of the preceding claims, **characterized in that** the compressed gas is cooled by spraying in water.

6. The method according to any one of the preceding claims, **characterized in that** the high-temperature store (5) is heated by means of electricity to a temperature above the turbine inlet temperature TIT.

7. The method according to any one of the preceding claims, **characterized in that** converting electrical energy to high-temperature heat for the high-temperature store (5) takes place by means of an electrical resistor or by means of induction.

8. The method according to any one of the preceding claims, **characterized in that** electrical heating of the high-temperature store (5) takes place in at least two, preferably a plurality of segments distributed over the entire height.

9. The method according to any one of the preceding claims, **characterized in that** the turbine inlet temperature and the turbine power can be regulated by means of a bypass line and a bypass valve (9).

10. The method according to any one of the preceding claims, **characterized in that** during the electricity generation phase, the gas serving as the working medium is air or another gas comprising oxygen.

11. The method according to any one of the preceding claims, **characterized in that** before the inlet to the turbine, a quantity of natural gas (10) or another gaseous or liquid fuel is added.

12. A device for storing energy by converting into thermal energy and subsequently producing electricity, the device comprising a gas turbine set having a compressor (1), expander (6), and electrical generator (8), having at least one first (3) and one second (4) low-temperature heat store, at least one high-temperature store (5) being connected downstream and serving for heating the working medium to the turbine inlet temperature TIT after the low-temperature store (3, 4), **characterized in that** said store is set up so that in the bulk material serving as the heat storage medium (11), the ratio between the packing height in the flow direction and the average particle diameter is at least 10, preferably at least 100, more preferably at least 250, even more preferably at least 500, and particularly preferably at least 1000, and that integrated heating elements in the high-temperature store are made of spirals lying on top of each other.

13. The device according to claim 12, **characterized in that** a heat exchanger (2) is connected downstream of the compressor (1) and cools down the working medium and draws off the captured waste heat as usable heat.

14. The device according to claim 12 or 13, **characterized in that** a water spray nozzle is provided after the compressor (1).

15. The device according to at least one of the claims 12-14, **characterized in that** a bypass line having a bypass valve (9) is connected downstream between the inlet and outlet of the high-temperature store (5).

16. The device according to at least one of the claims 12-15, **characterized in that** a line (10) for feeding in fuel is provided before the inlet to the turbine (6).

17. The device according to at least one of the claims 12-16, **characterized in that** a switching unit is provided for alternately switching on at least one first (3) low-temperature heat store and at least one second low-temperature heat store (4) in the line branch after the turbine (6) or after the compressor (1).

18. The device according to at least one of the claims 12-17, **characterized in that** bulk material generators are used as the low-temperature stores (3, 4).

19. The device according to at least one of the claims 12-18, **characterized in that** recuperative heat exchangers are used in place of low-temperature stores (3, 4).

20. The device according to at least one of the claims 12-19, **characterized in that** the high-temperature store (5) consists of a bulk material regenerator having integrated electrical heating.

21. The device according to claim 20, **characterized in that** the electrical heating of the high-temperature store (5) consists of at least two, preferably a plurality of, heating elements (11, 12, 13) independent of each other and distributed over the entire height.

22. The device according to claim 21, **characterized in that** a wire made of stainless steel or heat-resistant steel is used as the heating wire of the spiral.


**Revendications**

1. Procédé pour stocker de l'électricité en la convertissant en énergie thermique et en produisant ensuite de l'électricité au moyen

   - d'un groupe à turbine à gaz avec compresseur (1), détendeur (6) et générateur de courant électrique (8),
   - avec au moins un premier (3) et un deuxième (4) accumulateurs à basse température,
   - et d'un accumulateur à haute température (5) avec une matière en vrac en tant qu'accumulateur de chaleur (11),

   dans lequel l'énergie électrique sous forme de chaleur à haute température au-dessus de la température de sortie de turbine TOT est stockée dans un accumulateur à haute température (5) et, pendant la phase de production d'électricité, un gaz comprimé provenant du compresseur (1) est chauffé dans un accumulateur à basse température (3, 4) à une température proche de la température de sortie de turbine TOT et est ensuite chauffé dans un accumulateur à haute température (5) avec la chaleur stockée provenant de l'électricité à un niveau de température d'au moins la température d'entrée de turbine TIT, **caractérisé en ce que** le rapport entre la hauteur de lit dans la direction d'écoulement et le diamètre moyen de particule de la matière en vrac (11) dans l'accumulateur à haute température (5) est d'au moins 10, de préférence d'au moins 100, de manière plus préférée d'au moins 250, de manière encore plus préférée d'au moins 500 et, de manière particulièrement préférée d'au moins 1 000, et qu'à la fin d'une phase de décharge, avant que la turbine à gaz (6) ne s'immobilise, des vannes (41) et (33), ou des vannes (31) et (43), sont fermées de telle sorte que l'accumulateur à haute température (5), l'accumulateur à basse température (3) ou l'accumulateur à basse température (4) et la turbine (6) restent à peu près sous pression de service.

2. Procédé selon la revendication 1, **caractérisé en ce que** le temps de décharge Δt de l'accumulateur à haute température (5) satisfait à la relation suivante :

$$0,5 \cdot (M_s/m_G) \cdot (c_s/C_p) \cdot \Delta\theta \leq \Delta t \leq 0,99 \, (M_s/m_G) \, (c_s/c_P) \, \Delta\theta$$

sachant que : $M_s$ est la masse de la matière en vrac (11), $m_G$ est le débit de gaz, $c_s$ est la capacité thermique massique des particules de matière en vrac, $c_P$ est la capacité thermique massique du gaz, $\Delta\Theta$ = (TPHE-TOT)/(TMAX-TOT) est la différence de températures relative, TPHE est la température moyenne du gaz à la sortie de l'accumulateur à haute température (5), TMAX est la température maximale de la chaleur à haute température stockée et TOT est la température du gaz à l'entrée de l'accumulateur à haute température.

3. Procédé selon la revendication 1 ou 2, **caractérisé en ce que** le refroidissement dans l'accumulateur à haute température (5) pendant une phase de production d'électricité est limité seulement jusqu'à la température de sortie de turbine TOT.

4. Procédé selon l'une quelconque des revendications précédentes, **caractérisé en ce que** le gaz comprimé est amené à au moins un échangeur de chaleur (2) afin d'extraire la chaleur dissipée récupérée en tant que chaleur utile.

5. Procédé selon l'une quelconque des revendications précédentes, **caractérisé en ce que** le gaz comprimé est refroidi par injection d'eau.

6. Procédé selon l'une quelconque des revendications précédentes, **caractérisé en ce que** l'accumulateur à haute température (5) est chauffé à une température au-dessus de la température d'entrée de turbine TIT au moyen de courant électrique.

7. Procédé selon l'une quelconque des revendications précédentes, **caractérisé en ce que** la conversion de l'énergie électrique en la chaleur à haute température pour l'accumulateur à haute température (5) s'effectue par l'intermédiaire d'une résistance électrique ou par induction.

8. Procédé selon l'une quelconque des revendications précédentes, **caractérisé en ce qu'**un chauffage électrique de l'accumulateur à haute température (5) a lieu dans au moins deux, de préférence plus de deux, segments répartis sur l'ensemble de la hauteur.

9. Procédé selon l'une quelconque des revendications précédentes, **caractérisé en ce que** la température d'entrée de la turbine et la puissance de la turbine peuvent être régulées au moyen d'un conduit de dérivation et d'une vanne de dérivation (9).

10. Procédé selon l'une quelconque des revendications précédentes, **caractérisé en ce que**, pendant la phase de production d'électricité, le gaz servant de fluide de travail est l'air ou un autre gaz contenant de l'oxygène.

11. Procédé selon l'une quelconque des revendications précédentes, **caractérisé en ce que**, avant l'entrée dans la turbine, une quantité de gaz naturel (10) ou d'un autre combustible gazeux ou liquide est fournie.

12. Dispositif pour stocker de l'électricité en la convertissant en énergie thermique et en produisant ensuite de l'électricité, le dispositif comprenant un groupe à turbine à gaz avec compresseur (1), détendeur (6) et générateur de courant électrique (8), avec au moins un premier (3) et un deuxième (4) accumulateurs de chaleur à basse température, dans lequel au moins un accumulateur à haute température (5) est disposé en aval, qui sert à chauffer le fluide de travail en aval de l'accumulateur à basse température (3, 4) à la température d'entrée de turbine TIT, **caractérisé en ce que** celui-ci est configuré de sorte que, dans la matière en vrac qui sert de milieu accumulateur de chaleur (11), le rapport entre la hauteur de lit dans la direction d'écoulement et le diamètre moyen de particule est d'au moins 10, de préférence d'au moins 100, de manière plus préférée d'au moins 250, de manière encore plus préférée d'au moins 500 et, de manière particulièrement préférée, d'au moins 1 000, et que des éléments chauffants intégrés dans l'accumulateur à haute température sont constitués de spirales superposées.

**13.** Dispositif selon la revendication 12, **caractérisé en ce qu'**un échangeur de chaleur (2) est connecté en aval du compresseur (1), qui refroidit le fluide de travail et extrait la chaleur dissipée, récupérée, en tant que chaleur utile.

**14.** Dispositif selon la revendication 12 ou 13, **caractérisé en ce qu'**une injection d'eau est prévue en aval du compresseur (1).

**15.** Dispositif selon au moins l'une quelconque des revendications 12-14, **caractérisé en ce qu'**un conduit de dérivation avec une vanne de dérivation (9) est connecté en aval entre l'entrée et la sortie de l'accumulateur à haute température (5).

**16.** Dispositif selon au moins l'une quelconque des revendications 12-15, **caractérisé en ce qu'**un conduit (10) pour l'alimentation en combustible est prévu en amont de l'entrée de la turbine (6).

**17.** Dispositif selon au moins l'une quelconque des revendications 12-16, **caractérisé en ce qu'**il est prévu dans la branche de conduit en aval de la turbine (6) ou en aval du compresseur (1), un organe de commutation permettant de mettre en marche alternativement au moins un premier (3) accumulateur de chaleur à basse température et au moins un deuxième (4) accumulateur de chaleur à basse température.

**18.** Dispositif selon au moins l'une quelconque des revendications 12-17, **caractérisé en ce que** des régénérateurs de matières en vrac sont utilisés en tant qu'accumulateurs à basse température (3, 4).

**19.** Dispositif selon au moins l'une quelconque des revendications 12-18, **caractérisé en ce que** des échangeurs de chaleur à récupération sont utilisés à la place d'accumulateurs à basse température (3, 4).

**20.** Dispositif selon au moins l'une quelconque des revendications 12-19, **caractérisé en ce que** l'accumulateur à haute température (5) consiste en un régénérateur de matières en vrac avec chauffage électrique intégré.

**21.** Dispositif selon la revendication 20, **caractérisé en ce que** le chauffage électrique de l'accumulateur à haute température (5) se compose au moins de deux, de préférence de plus de deux, éléments chauffants (11, 12, 13) indépendants les uns des autres, répartis sur l'ensemble de la hauteur.

**22.** Dispositif selon la revendication 21, **caractérisé en ce qu'**un fil en acier inoxydable ou en acier résistant à la chaleur est utilisé comme fil chauffant de la spirale.

Fig. 1

Fig. 2b

Fig. 2a

Fig. 3b

Fig. 3a

17

Fig. 4

Fig. 5

Fig. 6

Fig. 7

5

PH-E

9

6

Fig. 8

5

PH-E

NG

10

6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011117785
- DE 102009018126 A1
- WO 2009103106 A2
- DE 102013004330 A1
- DE 4236619 C2

- WO 2013005192 A1
- DE 10039246 C2
- DE 102009038322 A1
- EP 0620909 B1